# EUROPÄISCHE PATENTSCHRIFT

(11) **EP 2 276 645 B1**
(45) Veröffentlichungstag und Bekanntmachung des Hinweises auf die Patenterteilung: **30.01.2013**
(21) Anmeldenummer: 09776717.2
(22) Anmeldetag: 12.06.2009
(51) Int. Cl.: B60K 17/34, B60K 17/348

(54) **ANTRIEBSVORRICHTUNG FÜR KRAFTFAHRZEUGE MIT ALLRADANTRIEB**
DRIVING DEVICE FOR ALL-WHEEL DRIVE MOTOR VEHICLES
DISPOSITIF D'ENTRAÎNEMENT POUR VÉHICULES AUTOMOBILES À QUATRE ROUES MOTRICES

(30) Priorität: 15.06.2008 DE 102008027992
(43) Veröffentlichungstag der Anmeldung: 26.01.2011
(60) Teilanmeldung: 12162199.9
(73) Patentinhaber: FZGmbH, 85748 Garching (DE)
(72) Erfinder: HÖHN, Bernd-Robert, 81925 München (DE)
(74) Vertreter: Kramer - Barske - Schmidtchen
(86) Internationale Anmeldenummer: PCT/EP2009/004252
(87) Internationale Veröffentlichungsnummer: WO 2010/003505

(56) Entgegenhaltungen:
- WO-A-03/042564
- WO-A-2006/029434
- DE-A1- 10 315 181
- US-A- 4 677 873
- US-A- 5 162 026

## Beschreibung

Die Erfindung betrifft eine Antriebsvorrichtung für Kraftfahrzeuge mit Allradantrieb, insbesondere für Quereinbau des Antriebsaggregates, gemäß dem Oberbegriff des Patentanspruches 1.

Eine derartige Antriebsvorrichtung zeigt die DE 103 15 181 A1, bei der ein Zwischenachsdifferenzial und ein Achsdifferenzial als Stirnraddifferenziale ausgeführt sind, die zur Erzielung einer insbesondere für den Quereinbau des Antriebsaggregates günstigen, baulich gedrängten Konstruktion einander unmittelbar benachbart und getriebetechnisch miteinander verknüpft sind. Dabei ist der Steg des Zwischenachsdifferenziales angetrieben und verteilt das Abtriebsmoment einerseits über ein Sonnenrad auf z.B. die Hinterachse des Kraftfahrzeuges, während das Außenrad den Steg des benachbarten Achsdifferenziales antreibt, dessen als Hohlräder ausgebildete Abtriebselemente über Achswellen die Vorderräder des Kraftfahrzeuges antreiben.

Aufgabe der Erfindung ist es, die Antriebsvorrichtung der gattungsgemäßen Art fertigungstechnisch und funktionell weiter zu verbessern.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die beiden Differenziale getriebetechnisch so ausgeführt sind, dass sie einen gemeinsamen Steg aufweisen. Daraus resultieren eine Reihe von fertigungstechnischen Vereinfachungen mit damit verbundenen Kostenvorteilen. Zudem wird eine baulich noch gedrängtere, besonders robuste Konstruktion der Antriebsvorrichtung erzielt, die zudem weitere, funktionelle vorteilhafte Ausgestaltungen ermöglicht.

So kann zur Erzielung einer besonders robusten und stabilen Konstruktion der gemeinsame Steg innerhalb eines im Getriebegehäuse über Wälzlager drehbar gelagerten Differenzialgehäuses angeordnet sein und zwei ringförmige Radialflansche aufweisen, wobei die die Planetenräder tragenden Lagerbolzen beidseitig in den Radialflanschen abgestützt sind.

Insbesondere können die Planetenräder beider Differenziale auf jeweils gemeinsamen Lagerbolzen des Steges gelagert sein. Die Lagerbolzen erstrecken sich somit durchgehend durch beide Differenziale und bilden neben einer kostengünstigen Konzeption einen besonders steifen Steg mit entsprechend günstiger Momentenabstützung in Antriebs-Zug- und Schubrichtung.

In baulich einfacher Weise können die Ausgangselemente des Achsdifferenziales einander unmittelbar benachbarte, außenverzahnte Sonnenräder sein, von denen ein jedes mit einem Satz der miteinander in Eingriff befindlichen Doppel-Planetenräder kämmt.

Ferner können die beiden Sonnenräder des Achsdifferenziales gleiche Zähnezahlen, durch Profilverschiebung aber derart ungleiche Kopfkreisdurchmesser aufweisen, dass bei zumindest im Kopfkreisdurchmesser gleichen Planetenrädern die Zahneingriffe mit den korrespondierenden Differenzialelementen sichergestellt sind. Demzufolge können bei einer in Umfangsrichtung besonders klein bauenden Konstruktion der Antriebsvorrichtung ggf. sämtliche Planetenräder in kostengünstiger Weise Gleichteile sein.

Dabei ist es vorteilhaft, wenn der Achsabstand a₁ zwischen dem Außenrad des Zwischenachsdifferenziales und den korrespondierenden Planetenrädern betragsmäßig gleich dem Achsabstand a₂ zwischen den Planetenrädern und dem im Kopfkreisdurchmesser größeren Sonnenrad des Achsdifferenziales ist und wenn des weiteren der Achsabstand a₃ zwischen dem Sonnenrad des Zwischenachsdifferenziales und den Planetenrädern gleich dem Achsabstand a₄ zwischen dem im Kopfkreisdurchmesser kleineren Sonnenrad des Achsdifferenziales und den damit kämmenden Planetenrädern ist. Diese Konzeption der Achsabstände der betreffenden Antriebselemente der Differenziale ermöglicht eine besonders Bauraum effiziente Auslegung der Getriebeteile mit günstigen Zahneingriffen.

In vorteilhafter Weiterbildung der Erfindung können zumindest die Planetenräder, das Außenrad und das Sonnenrad des Zwischenachsdifferenziales derart schrägverzahnt sein, dass in Verbindung mit eingesetzten Reibelementen und/-oder reibungsmindernden Axiallagern zumindest in Antriebs-Zugrichtung eine Differenzialsperrwirkung erzielt ist. Der Vorschlag ermöglicht eine besonders kostengünstige, Drehmoment sensierende Differenzialsperre, wobei die aufgrund der Schrägverzahnung auftretenden Axialkräfte der antreibenden Getriebeteile zur Erzeugung einer definierten Sperrwirkung genutzt wird. In bevorzugter Weise kann dabei die Sperrwirkung nur in Zugrichtung - also bei antreibendem Antriebsaggregat - wirksam sein, während in Schubrichtung keine Sperrwirkung auftritt, um z.B. das Fahrdynamikverhalten oder die Bremswirkung des Kraftfahrzeuges bei ABS-Regelung nicht zu beeinträchtigen.

Bevorzugt können dabei an dem Sonnenrad des Zwischenachsdifferenziales und dem Steg an deren Radialflächen Reibscheiben und/oder Axialwälzlager vorgesehen sein, die in gewünschtem Maße den Sperrgrad des Zwischenachsifferenziales definieren.

Insbesondere kann demzufolge zwischen dem abtreibenden Sonnenrad des Zwischenachsdifferenziales, den beiden unmittelbar angrenzenden Sonnenrädern des Achsdifferenziales, dem Steg und der benachbarten Radialwand des Differerenzialgehäuses jeweils ein Axialwälzlager vorgesehen sein, um die aus der Schrägverzahnung auftretenden Axialkräfte durchgehend und ohne Reibungsverluste abzustützen.

Ggf. können in Weiterbildung der Sperrwirkung der Antriebsvorrichtung auch die Planetenräder und die Sonnenräder des Achsdifferenziales schrägverzahnt sein, wobei zwischen den Sonnenrädern des Achsdifferenziales oder dem teg und/oder dem Sonnenrad des Zwischenachsdifferenziales ebenfalls Reibscheiben angeordnet sind, die zumindest im Antriebs-Zugbetrieb eine Differenzial-Spernrvirkung erzeugen.

Die Momentenverteilung des Zwischenachsdifferenziales kann durch Wahl des Übersetzungsverhältnisses zwischen dem Sonnenrad und dem Außenrad zwischen bevorzugt 60:40 bis 40:60 ausgelegt sein, wodurch dem Kraftfahrzeug eine antriebsbedingte Untersteuerdendenz, eine Übersteuerdendenz oder ein neutrales Antriebsverhalten aufprägbar ist.

Schließlich können die Radialflansche des Steges konstruktiv und fertigungstechnisch günstig über Axiallager im Ausgleichsgehäuse abgestützt sein. Die von den Sonnenrädern der Differenziale abgehenden Abtriebswellen können zudem in Nabenabschnitten des Ausgleichsgehäuses bzw. der Abtriebshohlwelle des Zwischenachsdifferenziales gleitgelagert sein.

Ein Ausführungsbeispiel der Erfindung ist im folgenden mit weiteren Einzelheiten näher erläutert. Die schematische Zeichnung zeigt in:
- **Fig. 1**: eine Seitenansicht der Antriebsvorrichtung mit Übersicht auf die Verzahnungsverhältnisse der als Achsdifferenzial und Zwischenachsdifferenzial ausgeführten Stirnraddifferenziale in einem quer eingebauten Antriebsaggregat für Kraftfahrzeuge;
- **Fig. 2**: einen Schnitt gemäß Linie II - II der Fig. 1 durch die vollständige Antriebsvorrichtung;
- **Fig. 3**: einen Querschnitt entlang Linie III - III der Fig. 2 durch das Zwischenachsdifferenzial der Antriebsvorrichtung; und
- **Fig. 4**: einen Querschnitt gemäß Linie IV - IV der Fig. 2 durch das Achsdifferenzial der Antriebsvorrichtung.

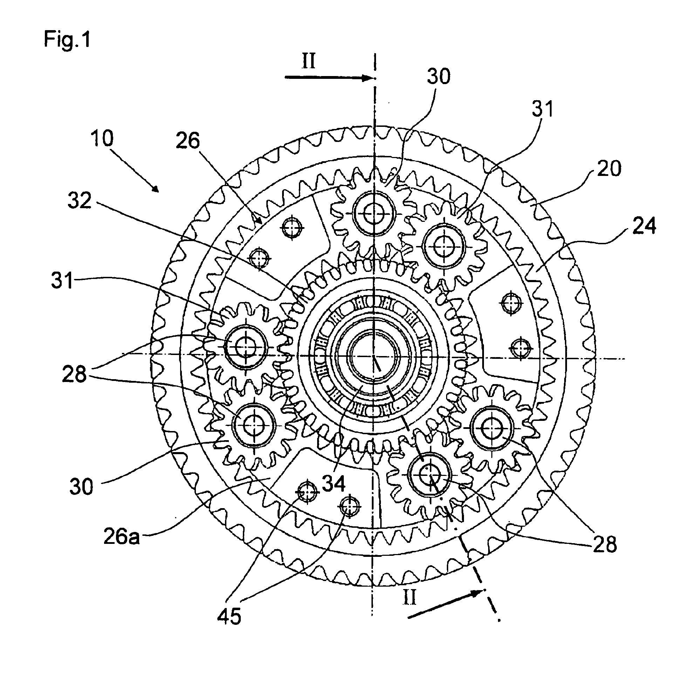

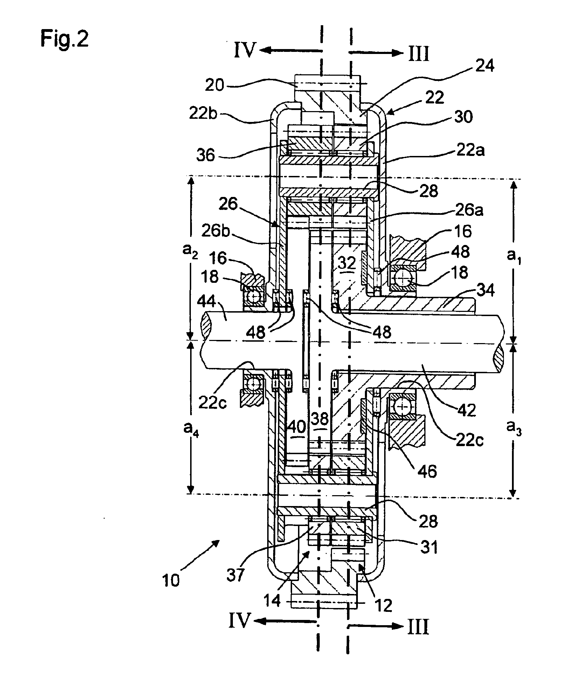

Gemäß den Fig. 1 und 2 setzt sich die Antriebsvorrichtung 10 zusammen aus einem Zwischenachsdifferenzial 12 und einem Achsdifferenzial 14, die als Stirnraddifferenziale ausgebildet und einander unmittelbar axial benachbart angeordnet sind. Die Antriebsvorrichtung 10 ist in einem nur angedeuteten Getriebegehäuse 16 über Wälzlager bzw. Kugellager 18 drehbar gelagert. Das Getriebegehäuse 16 ist Teil eines gemeinsamen Gehäuses mit einem Geschwindigkeits-Wechselgetriebe eines frontseitig quer eingebauten Antriebsaggregates des Kraftfahrzeuges.

Die Antriebsvorrichtung 10 weist ein ringförmiges, außenverzahntes Antriebszahnrad 20 auf, das in nicht dargestellter Weise mit einem korrespondierenden Abtriebszahnrad des Wechselgetriebes trieblich verbunden ist.

Das Antriebszahnrad 20 ist in dem die beiden Stirnraddifferenziale 12, 14 umschließenden Differenzialgehäuse 22 fest angeordnet und weist seitliche Radialwände 22a, 22b auf, an die Nabenabschnitte 22c angeformt sind, über die das Differerenziatgehäuse 22 über die Kugellager 18 entsprechend drehgelagert ist.

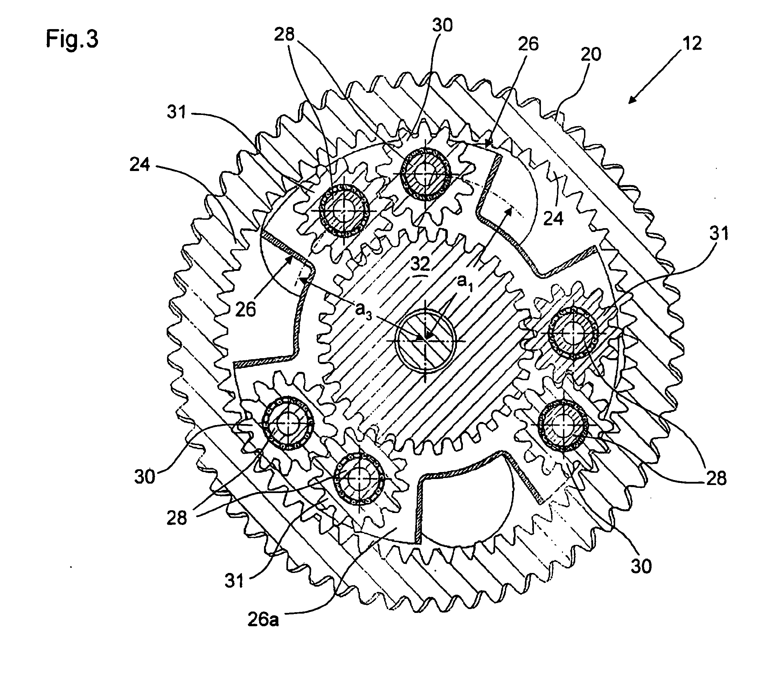

Das Zwischenachsdifferenzial 12 (vgl. auch Fig. 3) setzt sich zusammen aus einem ringförmigen, innenverzahnten Außenrad 24, einen Steg 26 mit Lagerbolzen 28, auf denen zwei Sätze von jeweils drei Planetenrädern 30, 31 drehbar gelagert sind und einem zentralen, außenverzahnten Sonnenrad 32, das mit einer Abtriebshohlwelle 34 fest verbunden ist. Die Planetenräder 30, 31 kämmen wie aus Fig. 3 ersichtlich ist miteinander, sowie die Planetenräder 30 mit dem Außenrad 24 und die Planetenräder 31 mit dem Sonnenrad 32. Das Außenrad 24 ist mit dem Antriebszahnrad 20 fest verbunden, z.B. mittels einer Kerbverzahnung, Pressverbindung, Schweißverbindung, etc. oder einteilig aus-geführt.

Das Zwischenachsdifferenzial 12 ist von der Bauart ein Plusgetriebe mit der Standübersetzung i = 2. Bei festgehaltenem Steg 26 drehen das Außenrad 24 und das Sonnenrad 32 gleich. Wird das Außenrad 24 von dem Antriebszahnrad 20 angetrieben, wird das Drehmoment auf das Sonnenrad 32 und den Steg 26 verteilt.

Die Aufteilung hängt von der gewählten Standübersetzung i des Plusgetriebes 12 ab. Ist die Zähnezahl z des Sonnenrades 32 größer als die Zähnezahl z/2 des Außenrades 24, so erhält das Sonnenrad 32 mehr als 50% des Gesamtmoments, der Steg 26 weniger als 50%. Im umgekehrten Falls erhält das Sonnenrad 32 weniger als 50% des Gesamtmoments, der Steg 26 mehr als 50%. Eine bevorzugte Momentenverteilung beträgt zwischen 60:40 (untersteuernd), 50:50 (neutral) oder 40:60 mit Übersteuertendenz bzw. größerem Antriebsmoment an den Hinterrädern des Kraftfahrzeuges.

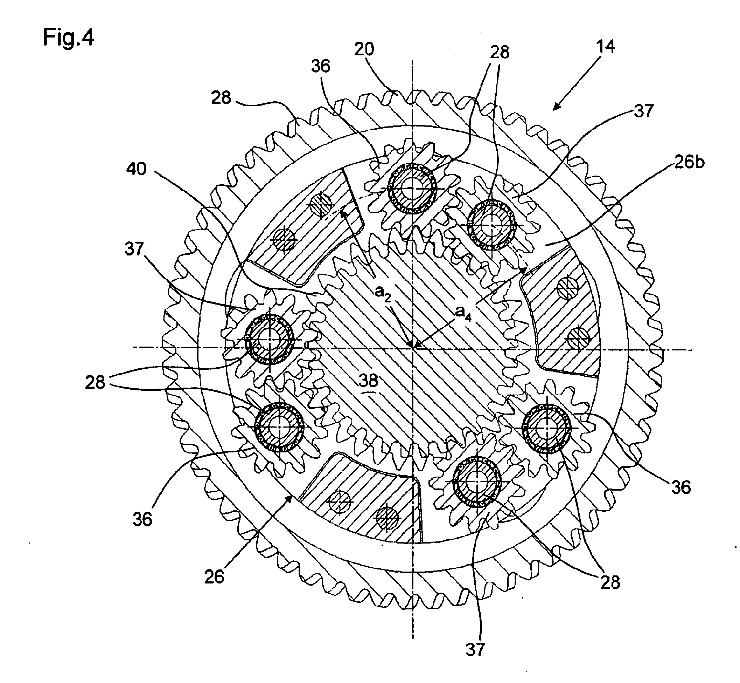

Das Achsdifferenzial 14 (vgl. auch Fig. 4) setzt sich zusammen aus dem gemeinsamen Steg 26, auf dessen Lagerbolzen 28 axial benachbart zu den Planetenrädern 30, 31 wiederum zwei Sätze Planetenräder 36, 37 drehbar gelagert sind, die miteinander und jeweils mit einem der beiden Sonnenräder 38, 40 in Eingriff sind. Die beiden Sonnenräder 38, 40, die wie ersichtlich jeweils etwa die halbe Breite des Sonnenrades 32 aufweisen, sind fest mit abtriebsseitigen Achswellen 42, 44 verbunden.

Die Breite der Planetenräder 36 erstreckt sich über die Breite der beiden Sonnenräder 38, 40. Die Planetenräder 37 hingegen sind schmäler ausgeführt; deren Breite ist gleich der Breite des Sonnenrades 38. Die Planetenräder 36 kämmen mit dem Sonnenrad 40 und mit den Planetenrädern 37, die zudem mit dem Sonnenrad 38 in Eingriff sind.

Ferner sind die Sonnenräder 38, 40 mit einer gleichen Zähnezahl z ausgeführt. Um dies konstruktiv zu ermöglichen, sind die Verzahnungen der beiden Sonnenräder 38, 40 mit extremer Profilverschiebung hergestellt; dies ermöglicht bei gleichen Zähnezahlen z und gleichem Modul m einen derart unterschiedlichen Kopfkreisdurchmesser der Sonnenräder (vgl. Fig. 4), dass die Planetenräder 36 (baulich gleich den Planetenrädern 37, aber doppelt so breit) nicht mit dem im Kopfkreisdurchmesser kleineren Sonnenrad 38 in Eingriff kommen.

Das Achsdifferenzial 14 weist eine Standübersetzung von i = -1 auf. Es ist ein Minusgetriebe, mit den zwei außenverzahnten Sonnenrädern 38, 40 und den Planetenrädern 36, 37. Die Momentenverteilung auf die beiden Sonnenräder 38, 40 ist 50:50; dazu müssen die beiden Sonnenräder 38, 40 wie vorbeschrieben die gleiche Zähnezahl z besitzen, was durch die beschriebene Profilverschiebung der Außenverzahnungen der Sonnenräder 38, 40 gegeben ist.

Um die Verzahnungsverhältnisse bei einem einheitlichen Steg 26 mit einheitlichen Lagerbolzen 28 bei beiden Stirnraddifferenzialen 12, 14 sicherzustellen, sind folgende Drehachsen- und Verzahnungsabstände verwirklicht:

Mit Bezug zur Fig. 2 ist der Achsabstand a₁ zwischen dem innenverzahnten Außenrad 24 des Zwischenachsdifferenziales 12 und den korrespondierenden Planetenrädern 30 betragsmäßig gleich dem Achsabstand a₂ zwischen den Planetenrädern 36 und dem im Kopfkreisdurchmesser größeren Sonnenrad 40 des Achsdifferenziales 14, siehe dazu auch Fig. 3 und 4.

Ferner ist der Achsabstand a₃ zwischen dem Sonnenrad 32 des Zwischenachsdifferenziales 12 und den korrespondierenden Planetenrädern 31 gleich dem Achsabstand a₄ zwischen dem im Kopfkreisdurchmesser kleineren Sonnenrad 38 des Achsdifferenziales 14 und den damit kämmenden Planetenrädern 37.

Wie insbesondere der Fig. 3 entnehmbar ist, sind dabei die Hüllkreise der Drehachsen der Lagerbolzen 28 derart unterschiedlich, dass bei baulich gleichen Planetenrädern 30, 31 die Planetenräder 30 mit dem Außenrad 24 und die Planetenräder 31 mit dem Sonnenrad 32 in Eingriff sind. Durch die unterschiedlichen Achsabstände a1 und a3 (Fig.3) ist gewährleistet, dass die Planetenräder 30 nicht mit dem Sonnenrad 32 in Eingriff kommen und die Planetenräder 31 nicht mit dem innenverzahnten Außenrad 24 kämmen.

Der Steg 26 (Fig. 2) weist zwei ringförmige Radialflansche 26a, 26b auf, die mit den durchgehenden Lagerbolzen 28 beidseitig verbunden sind und zwischen sich in axialer Richtung die Planetenräder 30,31 und 36,37, sowie die Sonnenräder 32, 38, 40 aufnehmen.

Die Radialflansche 26a, 26b sind in ihren zwischen den Lagerbolzen 28 liegenden Umfangsbereichen beispielhaft durch die Niete 45 (vgl. Fig. 1) miteinander verbunden. Die Verbindung der beiden Radialflansche 26a, 26b zu dem Steg 26 kann auch durch Schrauben erfolgen oder die Teile können verschweißt oder gelötet werden.

Das Sonnenrad 32 treibt über die Abtriebshohlwelle 34 über einen nicht dargestellten Kegeltrieb und eine Kardanwelle auf ein Hinterachsdifferenzial des Kraftfahrzeuges ab. Über die beiden Achswellen 42, 44 wird das Antriebsmoment in bekannter Weise zu den beiden Vorderrädern des Kraftfahrzeuges geleitet. Die besagten Wellen sind an den Nabenabschnitten 22c des Differenzialgehäuses 22 und die Achswelle 42 innerhalb der Abtriebshohlwelle 34 gleitgelagert.

Die Verzahnungen des Außenrades 24, der Planetenräder 30, 31 und des Sonnenrades 32 sind derart schrägverzahnt ausgeführt, dass bei einer Übertragung eines Antriebsmomentes (in Zug- und Schubrichtung) Axialkräfte auftreten. Diese werden dazu genutzt, eine definierte Differenzialsperrwirkung zu erzeugen.

Dazu ist zwischen dem Sonnenrad 32 und dem Radialflansch 26a des Steges 26 an deren einander zugewandten Radialflächen eine Reibscheibe 46 (Fig. 2) eingesetzt, die bei einem Antriebs- bzw. Zugdrehmoment eine Sperrwirkung erzeugt (Ausgleichsbewegung zwischen Sonnenrad 32 und Steg 26 sind gebremst).

Des weiteren sind zwischen den Radialwänden 22a, 22b des Differenzialgehäuses 22, den Radialflanschen 26a, 26b des Steges 26 und den Sonnenrädern 32, 38 und 40 Axialwälzlager bzw. Nadellager (einheitlich mit 48 bezeichnet) eingesetzt, die bei in umgekehrter Drehrichtung wirkenden Antriebs-Schubmomenten die Axialkräfte aus den Schrägverzahnungen reibungsarm innerhalb des Getriebegehäuses 16 abstützen und somit keine Sperrwirkung erzeugen.

Im Antriebs- bzw. Zugbetrieb des Kraftfahrzeuges ist durch die Schrägverzahnung der Getriebeelemente des Zwischenachsdifferenziales 12 eine definierte, nicht formschlüssige Sperrwirkung gegeben, die beispielsweise dem einseitigen Durchdrehen der Räder einer Achse des Kraftfahrzeuges entgegenwirkt.

Im Schubbetrieb hingegen ist die Reibscheibe 46 entlastet und eine unbehinderte Ausgleichsfunktion des Zwischenachsdifferenziales 12 aufgrund der Anordnung der Axialwälzlager 48 sichergestellt. Dies ist insbesondere bei einem Einsatz von fahrdynamischen Regelsystemen des Kraftfahrzeuges oder bei einer Antiblockierregelung der Betriebsbremse von Vorteil.

Soll bei dem Achsdifferenzial 14 ggf. ebenfalls eine Sperrwirkung im Zugbetrieb hergestellt werden, so kann dies durch Herstellung ebenfalls einer definierten Schrägverzahnung an den Getriebeelementen 36, 37 und 38, 40 und einer zwischen dem Radialflansch 26b des Steges 26 und dem benachbarten Sonnenrad 40 eingefügten Reibscheibe (nicht dargestellt) erfolgen. Die Reibscheibe kann zur Verminderung der Sperrwirkung ggf. auf einen kleineren Durchmesser als die Reibscheibe 46 des Zwischenachsdifferenziales 12 ausgelegt sein; sie ersetzt praktisch das in Fig.2 gezeigte Axialnadellager 48 zwischen diesen Teilen..

Die Höhe des jeweiligen Sperrwertes der beschriebenen, Drehmoment sensierenden Differenzialsperren hängt insbesondere von dem Schrägungswinkel der Verzahnungen der betreffenden Getriebeelemente, vom Reibradius der Reibscheiben und von deren Reibungszahl ab und kann konstruktiv gezielt eingestellt werden.

Die Verzahnungen der Getriebeelemente des Zwischenachsdifferenziales 12 und/oder des Achsdifferenziales 14 können alternativ auch in kostengünstiger Weise Geradverzahnungen ohne Erzeugung einer Sperrwirkung sein.

## Patentansprüche

1. Antriebsvorrichtung für Kraftfahrzeuge mit Allradantrieb, insbesondere für Quereinbau des Antriebsaggregates, bei der ein Achsdifferenzial (14) und ein Zwischenachsdifferenzial (12) als Stirnrad-Planetengetriebe baulich kombiniert in einem Differenzialgehäuse (22) ausgebildet sind,
**dadurch gekennzeichnet, dass**
das Achsdifferenzial (14) und das Zwischenachsdifferenzial (12) einen gemeinsamen Steg (26) aufweisen,
ein Außenrad (24) des Zwischenachsdifferenzials (12) ein Eingangselement des Zwischenachsdifferenzials (12) bildet, das über an dem Steg (26) gelagerte Planetenräder (30,31) des Zwischenachsdifferenzials dessen Sonnenrad (32) als Ausgangselement des Zwischenachsdifferenzials antreibt und
der Steg (26) über an ihm gelagerte Planetenräder (36, 37) des Achsdifferenzials (14) auf Ausgangselemente (38, 40) zu den Achswellen (42, 44) abtreibt.

2. Antriebsvorrichtung nach Anspruch 1, **dadurch gekennzeichnet, dass** der gemeinsame Steg (26) innerhalb eines im Getriebegehäuse (16) über Wälzlager (18) drehbar gelagerten Differenzialgehäuses (22) angeordnet ist und zwei ringförmige Radialflansche (26a, 26b) aufweist, wobei die die Planetenräder (30, 31,36, 37) tragenden Lagerbolzen (28) beidseitig in den Radialflanschen (26a, 26b) abgestützt sind.

3. Antriebsvorrichtung nach Anspruch 1 oder 2, **dadurch gekennzeichnet, dass** die Planetenräder (30, 31, 36, 37) beider Differenziale (12, 14) auf jeweils gemeinsamen Lagerbolzen (28) des Steges (26) gelagert sind.

4. Antriebsvorrichtung nach einem oder mehreren der vorhergehenden Ansprüche, **dadurch gekennzeichnet, dass** die Ausgangselemente des Achsdifferenziales (14) einander unmittelbar benachbarte, außenverzahnte Sonnenräder (38, 40) sind, wobei das Sonnenrad (38) mit den gleich breiten Planetenrädern (37) kämmt und die etwa doppelt so breiten Planetenräder (36) mit dem Sonnenrad (40) und mit den Planetenrädern (37) kämmen.

5. Antriebsvorrichtung nach einem oder mehreren der vorhergehenden Ansprüche, **dadurch gekennzeichnet, dass** die Sonnenräder(38, 40) des Achsdifferenziales (14) gleiche Zähnezahlen, durch Profilverschiebung aber derart ungleiche Kopfkreisdurchmesser aufweisen, dass bei zumindest im Kopfkreisdurchmesser gleichen Planetenrädern (36, 37) ein Zahneingriff zwischen den Planetenrädern (36) und dem im Kopfkreisdurchmesser kleineren Sonnenrad (38) ausgeschlossen ist.

6. Antriebsvorrichtung nach Anspruch 5, **dadurch gekennzeichnet, dass** der Achsabstand a₁ zwischen dem Außenrad (24) des Zwischenachsdifferenziales (12) und den korrespondierenden Planetenrädern (30) betragsmäßig gleich dem Achsabstand a₂ zwischen den Planetenräder (36) und dem im Kopfkreisdurchmesser größeren Sonnenrad (40) des Achsdifferenziales (14) ist.

7. Antriebsvorrichtung nach Anspruch 5 und 6, **dadurch gekennzeichnet, dass** der Achsabstand a₃ zwischen dem Sonnenrad (32) des Zwischenachsdifferenziales (12) und den Planetenrädern (31) gleich dem Achsabstand a₄ zwischen dem im Kopfkreisdurchmesser kleineren Sonnenrad (38) des Achsdifferenziales (14) und den damit kämmenden Planetenrädern (37) ist.

8. Antriebsvorrichtung nach einem oder mehreren der vorhergehenden Ansprüche, **dadurch gekennzeichnet, dass** zumindest die Planetenräder (30, 31), das Außenrad (24) und das Sonnenrad (32) des Zwischenachsdifferenziales (12) derart schrägverzahnt sind, dass in Verbindung mit eingesetzten Reibelementen (46) und/oder reibungsmindernden Axiallagern (48) zumindest in Antriebs-Zugrichtung eine Differenzialsperrwirkung erzielt ist.

9. Antriebsvorrichtung nach Anspruch 8, **dadurch gekennzeichnet, dass** an dem Sonnenrad (32) des Zwischenachsdifferenziales (12) und dem Steg (26) an deren einander zugewandten Radialflächen (26a) Reibscheiben (46) und/oder Axialwälzlager (48) vorgesehen sind.

10. Antriebsvorrichtung nach den Ansprüchen 8 und 9, **dadurch gekennzeichnet, dass** zwischen dem abtreibenden Sonnenrad (32) des Zwischenachsdifferenziales (12), den beiden unmittelbar angrenzenden Sonnenrädern (38, 40) des Achsdifferenziales (14) und der benachbarten Radialwand (22b) des Differenzialgehäuses (22) jeweils ein Axialwälzlager (48) vorgesehen ist.

11. Antriebsvorrichtung nach einem oder mehreren der vorhergehenden An-sprüche, **dadurch gekennzeichnet, dass** die Planetenräder (36, 37) und die Sonnenräder (38, 40) des Achsdifferenziales (14) schrägverzahnt sind und dass zwischen den Sonnenrädern (38, 40) des Achsdifferenziales (14) oder dem Steg (26) und/oder dem Sonnenrad (32) des Zwischenachsdifferenziales (12) Reibscheiben (46) angeordnet sind, die zumindest im Antriebs-Zugbetrieb eine Differenzial-Sperrwirkung erzeugen.

12. Antriebsvorrichtung nach einem oder mehreren der vorhergehenden Ansprüche, **dadurch gekennzeichnet, dass** die Momentenverteilung des Zwischenachsdifferenziales (12) durch Wahl des Übersetzungsverhältnisses zwischen dem Sonnenrad (32) und dem Außenrad (24) zwischen bevorzugt 60:40 bis 40:60 ausgelegt ist.

13. Antriebsvorrichtung nach einem oder mehreren der vorhergehenden Ansprüche, **dadurch gekennzeichnet, dass** die Radialflansche (26a, 26b) des Steges (26) über Axiallager (48) im Differenzialgehäuse (22) abgestützt sind.

14. Antriebsvorrichtung nach einem oder mehreren der vorhergehenden Anprüche, **dadurch gekennzeichnet, dass** die von den Sonnenrädern (32, 38, 40) der Differenziale (12, 14) abgehenden Abtriebswellen (34, 42, 44) in Nabenabschnitten (22c) des Differenziaigehäuses (22) bzw. in der Abtriebshohlwelle (34) des Zwischenachsdifferenziales (12) gleitgelagert sind.

## Claims

1. A drive device for vehicles with four-wheel drive, in particular for transverse assembly of the drive unit, wherein an axle differential (14) and an center axle differential (12) are formed as spur gear planetary gearings, which are constructionally combined in a differential housing (22),
**characterized in that**
the axle differential (14) and the center axle differential (12) have a common carrier (26),
a ring gear (24) of the center axle differential (12) forms an input element of the center axle differential (12), which drives the sun gear (32) of the center axle differential via planetary gears (30, 31) of the center axle differential, which are supported on the carrier (26), as an output element of the center axle differential, and
the carrier (26) drives to output elements (38, 40) to the axle shafts (42, 44) via planetary gears (36, 37) of the axle differential (14), which are supported on the carrier.

2. The drive device according to claim 1, **characterized in that** the common carrier (26) is arranged within a differential housing (22) that is rotatably supported within the gear housing (16) via roller bearings (18), and has two ring-shaped radial flanges (26a, 26b), the support pins (28) supporting the planetary gears (30, 31, 36, 37) being supported in the radial flanges (26a, 26b) on both ends.

3. The drive device according to claim 1 or 2, **characterized in that** the planetary gears (30, 31, 36, 37) of both differentials (12, 14) are supported on respective common support pins (28) of the carrier (26).

4. The drive device according to at least one of the previous claims, **characterized in that** the output elements of the axle differential (14) are directly adjacent sun gears (38, 40) having external teeth, the sun gear (38) meshing with planetary gears (37) of the same width, and the planetary gears (36) having about twice this width meshing with the sun gear (40) and the planetary gears (37).

5. The drive device according to at least one of the previous claims, **characterized in that** the sun gears (38, 40) of the axle differential (14) have the same number of teeth, but different tip circle diameters due to profile displacement, so that at least for the planetary gears (36, 37) having the same tip circle diameter, meshing of the planetary gears (36) and the sun gear (38), which has a smaller tip circle diameter, is impossible.

6. The drive device according to claim 5, **characterized in that** the axis-center distance a₁ between the ring gear (24) of the center axle differential (12) and the corresponding planetary gears (30) corresponds to the absolute value of the axis-center distance a₂ between the planetary gears (36) and the sun gear (40) of the axle differential (14), which sun gear (40) has a greater tip circle diameter.

7. The drive device according to claims 5 and 6, **characterized in that** the axis-center distance a₃ between the sun gear (32) of the center axle differential (12) and the planetary gears (31) corresponds to the axis-center distance a₄ between the sun gear (38) of the axle differential (14), which sun gear (38) has a smaller tip circle diameter, and the planetary gears (37) meshing with said gear.

8. The drive device according to at least one of the preceding claims, **characterized in that** at least the planetary gears (30, 31), the ring gear (24) and the sun gear (32) of the center axle differential (12) have helical gearing, so that, in combination with friction elements (46) and/or friction reducing axial bearings (48), a differential lock effect is obtained at least in drive pull direction.

9. The drive device according to claim 8, **characterized in that** friction disks (46) and/or axial roller bearings (48) are respectively provided on opposing radial faces (26a) of the sun gear (32) of the center axle differential (12) and the carrier (26).

10. The drive device according to claims 8 and 9, **characterized in that** an axial roller bearing (48) is respectively provided between the output sun gear (32) of the center axle differential (12), the two directly adjacent sun gears (38, 40) of the axle differential (14), and the adjacent radial wall (22b) of the differential housing (22).

11. The drive device according to at least one of the previous claims, **characterized in that** the planetary gears (36, 37) and the sun gears (38, 40) of the axle differential (14) have helical gearing, and that friction disks (46) are provided between the sun gears (38, 40) of the axle differential (14) or the carrier (26) and/or the sun gear (32) of the center axle differential (12), said friction disks generating a differential lock effect at least in drive pull direction.

12. The drive device according to at least one of the previous claims, **characterized in that** moment distribution of the center axle differential (12) is defined by selection of the transmission ratio between the sun gear (32) and the external gear (24), preferably between 60:40 and 40:60.

13. The drive device according to at least one of the previous claims, **characterized in that** the radial flanges (26a, 26b) of the carrier (26) are supported within the differential housing (22) via axial bearings (48).

14. The drive device according to at least one of the previous claims, **characterized in that** the output shafts (34, 42, 44) connected to the sun gears (32, 38, 40) of the differentials (12, 14) are slidably supported in hub sections (22c) of the differential housing (22) or in the output hollow shaft (34) of the center axle differential (12).

## Revendications

1. Dispositif d'entraînement pour véhicules automobiles à quatre roues motrices, en particulier pour montage transversal du groupe moteur, dans lequel un différentiel d'essieu (14) et un différentiel d'essieu intermédiaire (12) se présentent sous la forme d'un engrenage planétaire droit combiné structurellement dans un boîtier de différentiels (22),
**caractérisé en ce que**
le différentiel d'essieu (14) et le différentiel d'essieu intermédiaire (12) présentent une moulure commune (26),
un pignon externe (24) du différentiel d'essieu intermédiaire (12) forme un élément d'entrée du différentiel d'essieu intermédiaire (12) qui entraîne, via des pignons satellites (30, 31) du différentiel d'essieu intermédiaire montés sur la moulure (26), leur roue solaire (32) comme élément de sortie du différentiel d'essieu intermédiaire, et
la moulure (26), via les pignons satellites (36, 37) du différentiel d'essieu (14) qu'elle porte, mène via les éléments de sortie (38, 40) aux arbres d'essieu (42, 44).

2. Dispositif d'entraînement selon la revendication 1, **caractérisé en ce que** la moulure commune (26) est aménagée dans le boîtier de différentiels (22) monté à rotation dans le boîtier de transmission (16) via des roulements (18) et présente deux flasques radiaux annulaires (26a, 26b), les tourillons de palier (28) portant les pignons satellites (30, 31, 36, 37) s'appuyant des deux côtés dans les flasques radiaux (26a, 26b).

3. Dispositif d'entraînement selon la revendication 1 ou la revendication 2, **caractérisé en ce que** les pignons satellites (30, 31, 36, 37) des deux différentiels (12, 14) sont montés sur les tourillons de palier (28) respectivement communs de la moulure (26).

4. Dispositif d'entraînement selon une ou plusieurs des revendications précédentes, **caractérisé en ce que** les éléments de sortie du différentiel d'essieu (14) sont des roues solaires (38, 40) directement voisines dentées extérieurement, dans lequel la roue solaire (38) s'engrène sur les pignons satellites (37) de même largeur et les pignons satellites (36) plus ou moins deux fois aussi larges s'engrènent sur la roue solaire (40) et sur les pignons satellites (37).

5. Dispositif d'entraînement selon une ou plusieurs des revendications précédentes, **caractérisé en ce que** les roues solaires (38, 40) du différentiel d'essieu (14) présentent les mêmes nombres de dents, mais par décalage de profil des diamètres de cercle primitif tellement inégaux que, dans le cas au moins de pignons satellites (36, 37) de diamètre de cercle primitif égal, un engagement des dents entre les pignons satellites (36) et la roue solaire (38) de moindre diamètre de cercle primitif est exclu.

6. Dispositif d'entraînement selon la revendication 5, **caractérisé en ce que** la distance d'essieu a₁ entre le pignon externe (24) du différentiel d'essieu intermédiaire (12) et les pignons satellites (30) correspondants est d'un niveau égal à celui de la distance d'essieu a₂ entre les pignons satellites (36) et la roue solaire (40) de plus grand diamètre de cercle primitif du différentiel d'essieu (14).

7. Dispositif d'entraînement selon les revendications 5 et 6, **caractérisé en ce que** la distance d'essieu a₃ entre la roue solaire (32) du différentiel d'essieu intermédiaire (12) et les pignons satellites (31) est égal à la distance d'essieu a₄ entre la roue solaire (38) de moindre diamètre de cercle primitif du différentiel d'essieu (14) et les pignons satellites (37) qui s'engrènent sur celle-ci.

8. Dispositif d'entraînement selon une ou plusieurs des revendications précédentes, **caractérisé en ce qu'**au moins les pignons satellites (30, 31), le pignon externe (24) et la roue solaire (32) du différentiel d'essieu intermédiaire (12) ont une denture hélicoïdale telle que l'on obtienne un effet de blocage de différentiel en liaison avec des éléments de friction (46) et/ou des paliers lisses réducteurs de friction (48) utilisés au moins dans la direction de traction de l'entraînement.

9. Dispositif d'entraînement selon la revendication 8, **caractérisé en ce qu'**il est prévu sur la roue solaire (32) du différentiel d'essieu intermédiaire (12) et la moulure (26), sur leurs faces radiales (26a) tournées l'une vers l'autre, des disques de friction (46) et/ou des roulements axiaux (48).

10. Dispositif d'entraînement selon les revendications 8 et 9, **caractérisé en ce qu'**il est prévu entre la roue solaire de sortie (32) du différentiel d'essieu intermédiaire (12), les deux roues solaires (38, 40) directement contigus du différentiel d'essieu (14) et la paroi radiale adjacente (22b) du boîtier de différentiels (22), respectivement un roulement axial (48).

11. Dispositif d'entraînement selon une ou plusieurs des revendications précédentes, **caractérisé en ce que** les pignons satellites (36, 37) et les roues solaires (38, 40) du différentiel d'essieu (14) ont une denture hélicoïdale et **en ce que** sont agencés entre les roues solaires (38, 40) du différentiel d'essieu (14) ou la moulure (26) et/ou la roue solaire (32) du différentiel d'essieu intermédiaire (12) des disques de friction (46) qui produisent au moins dans la traction de l'entraînement un effet de blocage de différentiel.

12. Dispositif d'entraînement selon une ou plusieurs des revendications précédentes, **caractérisé en ce que** la distribution de moment du différentiel d'essieu intermédiaire (12) par le choix du rapport de transfert entre la roue solaire (32) et le pignon externe (24) est calibrée entre, de préférence, 60:40 et 40:60.

13. Dispositif d'entraînement selon une ou plusieurs des revendications précédentes, **caractérisé en ce que** les flasques radiaux (26a, 26b) de la moulure (26) s'appuient dans le boîtier de différentiels (22) via les roulements lisses (48).

14. Dispositif d'entraînement selon une ou plusieurs des revendications précédentes, **caractérisé en ce que** les arbres de sortie (34, 42, 44) partant des roues solaires (32, 38, 40) des différentiels (12, 14) sont montés sur des paliers lisses dans les sections de moyeu (22c) du boîtier de différentiels (22) ou dans l'arbre creux de sortie (34) du différentiel d'essieu intermédiaire (12).
